Europäisches Patentamt

European Patent Office

Office européen des brevets

(11) Publication number: **0 377 325**
**A1**

# EUROPEAN PATENT APPLICATION

(21) Application number: 89313620.0

(22) Date of filing: 27.12.89

(51) Int. Cl.⁵: **H01M 8/02**

(30) Priority: 28.12.88 JP 329144/89

(43) Date of publication of application:
**11.07.90 Bulletin 90/28**

(84) Designated Contracting States:
**AT BE CH DE ES FR GB GR IT LI LU NL SE**

(71) Applicant: **JAPAN GORE-TEX, INC.**
**42-5, 1-chome Akazutsumi**
**Setagaya-ku Tokyo 156(JP)**

(72) Inventor: **Nakata, Yasuki c/o Japan Gore-Tex,**
**Inc.**
**Okayama Plant 123, Minamigata**
**Yoshinaga-cho**
**Wake-gun Okayama-ken 709-02(JP)**
Inventor: **Kato, Hiroshi c/o Japan Gore-Tex,**
**Inc.**
**Okayama Plant 123, Minamigata**
**Yoshinaga-cho**
**Wake-gun Okayama-ken 709-02(JP)**

(74) Representative: **Knott, Stephen Gilbert et al**
**MATHISEN, MACARA & CO. The Coach**
**House 6-8 Swakeleys Road**
**Ickenham Uxbridge Middlesex UB10 8BZ(GB)**

(54) Sheet matrix for use in fuel cells.

(57) In a sheet matrix for a fuel cell having a first layer comprising a mixture of a carbon based powder and a PTFE resin, combined with a second layer comprising a mixture of a non-carbon inert inorganic compound and a PTFE resin, the carbon based powder of the first layer is constituted wholly or predominantly by a low structure carbon powder having a dibutyl phthalate adsorption capability of not more than 50 ml per 100 g of powder.

EP 0 377 325 A1

## SHEET MATRIX FOR USE IN FUEL CELLS

The present invention relates to a sheet matrix for use in fuel cells.

Matrix materials presently used in fuel cells are generally one or other of two types. Examples of the first type are described in U.S. Patents Nos. 4,000,006 and 4,017,664, and examples of the second type are described in U.S. Patent No. 3,575,718 and Japanese Laid-Open Patent Application (Kokai) No. 55-130077.

In the said U.S. Patents Nos. 4,000,006 and 4,017,664, matrix materials of the first type are disclosed which consist of at least 90 wt % silicon carbide (SiC) and polytetrafluoroethylene (hereafter referred to as "PTFE") as the remainder. These materials have been widely used in practical applications.

The SiC is inert with respect to hot phosphoric acid, and the electrical insulating properties of the materials are favorable. However, since the PTFE resin used as a binder has strong water-repelling properties (and therefore repels phosphoric acid), it is necessary to keep the total amount of PTFE resin used at 10 wt % or less (and preferably at 6 wt % or less) in order to maintain a good affinity for phosphoric acid, a high bubble pressure and a good ionic conductivity in the matrix as a whole. In this case, the matrix material is generally not sufficiently self-supporting for use as an independent matrix sheet, but must be used as an electrode coating. Such matrix materials formed as an electrode coating do not always show good adhesion to the electrodes on which they are formed. Cracks may be generated as a result of shrinkage accompanying the volatilization of the phosphoric acid and as a result of slight bending in the process of drying. These cracks cause a conspicuous drop in the bubble pressure so that materials with an intrinsically high bubble pressure cannot be obtained. Furthermore, since such matrix materials are formed on electrodes, the above defects and matrix defects caused by errors in the coating process result in the wasteful loss of expensive electrodes.

In U.S. Patent No. 3,575,718 and Japanese Laid-Open Patent Application (Kokai) No. 55-13007, matrix materials are described in the form of sheets which consist of a first layer comprising carbon and PTFE, and a second layer comprising a non-carbon inert inorganic compound or SiC together with PTFE. In these materials, the first layer has good gas barrier properties (i.e., a high bubble pressure) and a good ionic conductivity, while the second layer has a good ionic conductivity and low electronic conductivity. Accordingly, the matrix sheet as a whole has a high bubble pressure, a good ionic conductivity and a low electronic conductivity.

However, these sheet matrix materials exhibit an extremely strong electrolyte absorption, especially in the carbon containing layer. As a result, both swelling accompanying the addition of the electrolyte and shrinkage accompanying decreases in the electrolyte due to volatilization, etc., are extremely large. This results in the generation of serious defects. In particular, as a result of differences in swelling and shrinkage between the first and second layers, serious bowing occurs during the addition of the electrolyte, so that battery assembly becomes difficult. Furthermore, when the electrolyte decreases, cracks are generated in the carbon containing layer as a result of shrinkage and loss of resilience. Such cracks lead to a serious drop in battery reliability, so that practical use of the battery is hindered.

According to the present invention there is provided a sheet matrix for use in a fuel cells, particularly a fuel cell of the phosphoric acid type, having a first layer comprising a mixture of carbon powder having a low- structure as defined by having a dibutyl phthalate adsorption capability of not more than 50 ml per 100 g of powder and a polytetrafluoroethylene resin, and a second layer comprising a mixture of a non-carbon inert inorganic compound and a polytetrafluoroethylene resin, the layers being combined to form the sheet matrix.

Such a sheet matrix is self-supporting, and exhibits low electrolyte adsorption and high mechanical strength. The sheet matrix is resistant to bowing and cracking, and therefore a high-bubble pressure can be maintained.

The sheet matrix in accordance with the invention may comprise more than one of each of the first and second layers, the layers being formed into an integral sheet matrix.

The carbon powder used in the first layer is a low-structure carbon powder as defined by the carbon industry. A carbon powder which exhibits a dibutyl phthalate adsorption value of 100 ml or less per 100 g of carbon powder is considered a low-structure carbon powder, and the carbon powder used in accordance with the invention exhibits dibutyl phthalate adsorption of 50 ml or less per 100 g of carbon powder.

The carbon powder of the first layer may be exclusively a low-structure carbon powder as defined, having a dibutyl phthalate adsorption value of 50 ml or less per 100 g of powder and preferably a surface area of 100 $m^2$/g or less. Alternatively, the first layer may comprise a PTFE resin mixed with a powder comprising a mixture of such low-structure carbon powder with other carbon powder or an inert inorganic powder. Where such a powder mixture is used, the percentage of low-structure carbon powder required in the mixture varies according to the low-structure carbon and the other carbon used. Generally, however, the percentage of low-structure carbon powder in the mixture should be 60% or greater, preferably 75% or greater.

The carbon powder or powder mixture preferably constitutes from 90 to 99% of the first layer, with the remaining 1 to 10% of the layer being formed by the PTFE resin. If the amount of PTFE resin in the layer is less than 1%, the required strength cannot be obtained, whereas if the PTFE resin content exceeds 10% the affinity of the layer for phosphoric acid is decreased.

A mixing method which may be used in forming the first layer involves uniformly mixing the components by means of appropriate mixing apparatus (e.g., a V type blender), after which a liquid lubricant is added to the resulting mixture and thoroughly mixed. Alternatively, a method may be used in which a specified amount of the carbon powder or powder mixture dispersed beforehand in water is added to an aqueous dispersion of PTFE resin. This mixture is then agitated by means of a mixer so that the PTFE resin and carbon powder are caused to undergo co-coagulation, and a specified amount of a liquid lubricant is added to the resulting mixed co-coagulation and thoroughly mixed.

The carbon powder and PTFE resin mixture containing a liquid lubricant may be formed into a layer by extrusion or rolling, or by a process using a combination of both.

The inert inorganic powder in the second layer preferably constitutes at least 85% of the second layer, more preferably at least 90%, but preferably not more than 98% of the layer. Examples of inert inorganic powders which may be used include niobium oxide, tantalum oxide, tungsten oxide, boron carbide, tungsten carbide, silicon carbide, silicon nitride, phosphates of titanium, tin, aluminium and zirconium, etc., and mixtures comprising powders of two or more of these compounds.

The amount of PTFE resin in the second layer is preferably 15% or less, more preferably 10% or less, but preferably not less than 2%. If the content of inert inorganic powder in the second layer is less than 85%, a sufficient affinity for phosphoric acid cannot be obtained, and if this content exceeds 98%, the strength of the layer will deteriorate so that cracking, etc., tends to occur.

The mixing of the inert inorganic powder and the PTFE resin, and the formation of the second layer from the resulting mixture may be effected by methods similar to those described above for the first layer.

The liquid lubricant used in forming the first and second layers may be any liquid lubricant capable of wetting the powder substances and the PTFE resin. Examples of suitable liquid lubricants include hydrocarbons such as alcohols, glycols, glycerine, petroleum naphtha and ethylene oxide, and water. The amount of liquid lubricant added to the carbon powder or powder mixture is generally 30 to 80 parts by weight per 100 parts bye weight of the powder. The amount of liquid lubricant added to the inert inorganic powder is generally 10 to 70 parts by weight per 100 parts by weight of inert inorganic powder. It is desirable to use the same liquid lubricant, or at least the same type of liquid lubricant, for both the carbon powder and the inorganic powder.

The combination of the first and second layers into a single integral sheet matrix may be accomplished as follows. Following the moulding of the respective layers to the required thicknesses, the respective layers may be prepared by removing the liquid lubricant (by heating or extrusion, etc.) and may then be laid together and bonded into an integral sheet matrix by pressing or hot pressing. Preferably, however, the sheet matrix of the present invention is produced by preparing the first and second layers so that the layers containing the liquid lubricant are thicker than the sheet matrix finally produced and the ratio of the thicknesses of the two layers is the same as the desired final thickness ratio of the layers in the integral sheet matrix, placing these layers together and forming an integral two-layer sheet by further rolling, and removing the liquid lubricant after the final thickness has been obtained.

It will of course be appreciated that although the formation of an integral sheet matrix in accordance with the invention has been described above using two layers, sheet matrices may also be produced in a similar manner using three or more layers. For example a first layer comprising a mixture of carbon powder and PTFE resin may be sandwiched between second and third layers each comprising a mixture of an inorganic compound and PTFE resin.

Some specific examples of the manufacture of matrix sheets in accordance with the present invention will now be described by way of further illustration of the invention.

Firstly, a number of individual sheets were made as follows:

### Sheet 1

A mixture consisting of 97% carbon black with a DBP adsorption value of 33 cc per 100 g and a particle size of 300 microns (manufactured by the thermal process, commercial name: THERMAX FLOROM N990 produced by CANCARB Co. of Canada), and 3% PTFE resin was produced by co-aggregation. 40 parts by weight of a suitable liquid lubricant was added to 100 parts by weight of this mixture, and a sheet with a film thickness of 800 microns was formed from the resulting mixture by paste extrusion and rolling.

Sheet 2

A further sheet with a film thickness of 800 microns was produced in the same manner as for sheet 1, but from a mixture consisting of 85% carbon black (the same carbon black as used in sheet 1), 11% powdered carbon with a DBP adsorption value of 185 cc per 100 g and a particle size of 30 microns (commercial name: VULCAN XC-72, manufactured by Cabot Co. U.S.A.), and 4% PTFE resin.

Sheet 3

A sheet with a thickness of 800 microns was produced by mixing 8% PTFE resin with 92% finely powdered SiC (mean particle size: 1.3 microns) and forming the mixture into a sheet as described for sheet 1.

Sheet 4

For comparison purposes, a further sheet with a film thickness of 800 microns was formed in a similar manner to sheets 1,2 and 3 from a mixture consisting of 92% VULCAN XC-72 and 8% PTFE resin.

For test purposes samples of sheets 1 and 3 were subjected to further rolling so that the thickness of each sheet was reduced to 120 microns. Afterwards, the liquid lubricant was removed from each sheet by heating. As a result, a first sheet consisting of a carbon powder and PTFE, and a second sheet consisting of finely powdered SiC and PTFE, were obtained suitable for combining to form a sheet matrix in accordance with the invention. The tensile strength of the first sheet was 0.2 g/mm², and that of the second sheet was 0.02 g/mm², showing that the second sheet had a lower strength than the first sheet despite the fact that the second sheet contained nearly three times as much PTFE binder as the first sheet.

Example 1

Samples of sheets 1 and 3 were laid together and rolled, and at the same time the liquid lubricant was removed from each sheet. As a result, a two-layer sheet matrix in accordance with the invention having a total thickness of 140 microns (first and second layers each 70 microns thick) was obtained.

The tensile strength of this sheet matrix was 0.15 g/cm². The sheet matrix exhibited good handling characteristics, and no bowing was observed even when it was impregnated with phosphoric acid. The phosphoric acid permeation rate was 25 mm/hr and the bubble pressure was 3.5 kg/cm². Thus, the sheet matrix showed satisfactory characteristics for use in fuel cells.

Example 2

Samples of sheets 2 and 3 were laid together in the following configuration: sheet 3/sheet 2/sheet 3. This assembly was then rolled to produce a three-layer composite sheet with a total thickness of 120 microns (thickness of each layer: 40 microns). The liquid lubricant was then removed, producing a sheet matrix in accordance with the present invention.

Comparative Example

A three-layer comparative sheet matrix was produced in the same manner as the composite three-layer sheet matrix of Example 2, except that a sample of the comparative sheet 4 was used as the intermediate layer of the three-layer configuration instead of the sheet 2.

The sheet matrices of Example 2 and the comparative example were impregnated with phosphoric acid, and the bubble pressure and strength were measured for each matrix. Next, the matrices were allowed to stand for 300 hours while being heated to a temperature of 200°C. Afterwards the bubble pressure and strength were again measured as before. Both the bubble pressure and the strength values were close to the initial values in the case of the matrix of Example 2, whereas both values showed a considerable drop in the case of the matrix of the comparative example.

In a further test, samples of sheets 1 and 4 were rolled to produce respective sheets with a thickness of 100 microns, following which the liquid lubricant was removed from each sheet. The sheets were then impregnated with 98% phosphoric acid, and heated to a temperature of 200°C for approximately 100 hours. As a result, the first sheet (sheet 1) showed a slight degree of bending, while the comparative sheet 4 exhibited considerable bending and widespread cracking. In other words, it was shown that a matrix with a high bubble pressure would be difficult to obtain using the comparative sheet 4.

## Claims

1. A sheet matrix for use in a fuel cell having a first layer comprising a mixture of carbon powder having a low-structure as defined by having a dibutyl phthalate adsorption capability of not more than 50 ml per 100 g of powder and a polytetrafluoroethylene resin, and a second layer comprising a mixture of a non-carbon inert inorganic compound and a polytetrafluoroethylene resin, the layers being combined to form the sheet matrix.

2. A sheet matrix for use in a fuel cell having a first layer comprising a mixture of at least 60% carbon powder having a dibutyl phthalate adsorption capability of 50 ml or less per 100 g of carbon, from 1 to 10% polytetrafluoroethylene resin, and an inert inorganic powder or a carbon powder having a dibutyl phthalate adsorption capability of more than 50 ml per 100 g of carbon as the balance, and a second layer comprising a mixture of a non-carbon inert inorganic compound and a polytetrafluoroethylene resin, the layers being combined to forms the sheet matrix.

3. A sheet matrix according to claim 1, in which the first layer contains from 90 to 99% of the carbon powder and from 1 to 10% of the polytetrafluoroethylene resin.

4. A sheet matrix according to any one of claims 1 to 3, in which the surface area of the low structure carbon powder is $100m^2/g$ or less.

5. A sheet matrix according to any one of the preceding claims, in which the second layer contains from 85 to 98% of the inert inorganic compound and from 2 to 15% of the polytetrafluoroethylene resin..

6. A sheet matrix according to any one of the preceding claims, having at least one further layer which is the same as either the first or the second layer.

European Patent Office

**EUROPEAN SEARCH REPORT**

Application Number

EP 89 31 3620

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 947 899 (ENGELHARD MINERALS & CHEMICALS CORP.)<br>* Claims 1-5 * & US-A-3 575 718 (Cat. D,A)<br>--- | 1,4 | H 01 M 8/02 |
| A | EP-A-0 071 268 (ENERGY RESEARCH CORP.)<br>--- | | |
| A | PATENT ABSTRACTS OF JAPAN, vol. 12, no. 115 (E-599)[2962], 12th April 1988; & JP-A-62 243 257 (SANYO ELECTRIC CO.) 23-10-1987<br>--- | | |
| A | PATENT ABSTRACTS OF JAPAN, vol. 7, no. 200 (E-196)[1345], 3rd September 1983; & JP-A-58 100 370 (SANYO DENKI K.K.) 15-06-1983<br>--- | | |
| A | PATENT ABSTRACTS OF JAPAN, vol. 13, no. 150 (E-742)[3498], 12th April 1989; & JP-A-63 310 571 (HITACHI LTD) 19-12-1988<br>----- | | TECHNICAL FIELDS SEARCHED (Int. Cl.5)<br><br>H 01 M |

The present search report has been drawn up for all claims

| Place of search | Date of completion of the search | Examiner |
|---|---|---|
| THE HAGUE | 05-04-1990 | D'HONDT J.W. |

EPO FORM 1503 03.82 (P0401)